# EUROPÄISCHE PATENTANMELDUNG

(11) **EP 3 337 013 A1**
(43) Veröffentlichungstag der Anmeldung: **20.06.2018**
(21) Anmeldenummer: 17199887.5
(22) Anmeldetag: 03.11.2017
(51) Int. Cl.: H02K 1/27

(54) **ELEKTRISCHE MASCHINE UMFASSEND EINEN ROTOR UND EINEN STATOR UND VERFAHREN ZUM BEFESTIGEN EINES PERMANENTMAGNETEN IN EINER AUFNAHMETASCHE EINES ROTORS ODER STATORS EINER ELEKTRISCHEN MASCHINE**

(30) Priorität: 16.12.2016 DE 102016225334
(71) Anmelder: Robert Bosch GmbH, 70442 Stuttgart (DE)
(72) Erfinder: Stein, Sebastian, 31199 Diekholzen (DE); Lange, Fabian, 30175 Hannover (DE)

(57) **Zusammenfassung**

Es wird eine elektrische Maschine umfassend einen Rotor (10) und einen Stator vorgeschlagen, wobei der Rotor (10) und/oder der Stator mindestens eine Aufnahmetasche (30, 31) zum Aufnehmen eines Permanentmagneten (40) umfasst, dadurch gekennzeichnet, dass der Permanentmagnet (40) mittels einer zweiteiligen Magnetfixierungsvorrichtung (20) in der Aufnahmetasche (30, 31) befestigt ist, wobei die Magnetfixierungsvorrichtung (20) - ein senkrecht zur Axialrichtung des Rotors (10) und/oder Stators im Wesentlichen flexibel ausgebildetes Klemmelement (50, 51) und - ein senkrecht zur Axialrichtung des Rotors (10) und/oder Stators im Wesentlichen starres Fixierungselement (60, 61) umfasst, wobei das Fixierungselement (60, 61) derart in dem Klemmelement (50, 51) angeordnet ist, dass das Fixierungselement (60, 61) das Klemmelement (50, 51) senkrecht zur Axialrichtung des Rotors (10) und/oder Stators auseinanderdrückt zur reibschlüssigen Fixierung des Permanentmagneten (40) in der Aufnahmetasche (30, 31).

## Beschreibung

### Gebiet der Erfindung

Die Erfindung betrifft eine elektrische Maschine umfassend einen Rotor und einen Stator und ein Verfahren zum Befestigen eines Permanentmagneten in einer Aufnahmetasche eines Rotors oder Stators einer elektrischen Maschine.

### Stand der Technik

Permanentmagneten werden üblicherweise in Aufnahmetaschen eines Rotors und/oder Stators einer elektrischen Maschine befestigt. Die DE 10 2000 905 484 A1, die DE 10 2015 121 855 A1 und die DE 10 2013 109 625 A1 beschreiben jeweils eine stoffschlüssige Fixierung der Permanentmagneten in Aufnahmetaschen mittels Klebstoff oder Gießharz. Hierbei werden in den Freiraum, der sich zwischen dem jeweiligen Permanentmagneten und der jeweiligen Wand bzw. Innenoberfläche der Aufnahmetasche hauptsächlich in axialer Richtung des Rotors bzw. Stators erstreckt, ein Klebstoff und/oder ein Gießharz eingebracht und ausgehärtet. Nachteilig hieran ist, dass üblicherweise bei Rotoren oder Stator mit einer großen axialen Länge das Problem auftritt, dass der Freiraum nicht über die gesamte axiale Länge gefüllt wird bzw. werden kann, da der Druckverlust des Klebstoffs bzw. Gießharzes über die Länge zu groß ist. Eine Vergrößerung des Freiraums senkrecht zur Axialrichtung des Rotors bzw. Stators zur Verringerung des Druckabfalls wirkt sich in der Regel negativ auf die elektromagnetische Auslegung des Rotors und/oder Stators aus. Ein weiterer Nachteil bei thermisch aushärtenden Klebestoffen bzw. Gießharzen ist in der Regel, dass der Rotor bzw. Stator aufgeheizt und abgekühlt wird und dies zusätzliche Energie und zusätzliche Zeit kostet.

### Offenbarung der Erfindung

### Vorteile der Erfindung

Ausführungsformen der vorliegenden Erfindung können in vorteilhafter Weise ermöglichen, einen Permanentmagneten in einer Aufnahmetasche eines Rotors bzw. Stators auch bei einer großen axialen Länge des Rotors bzw. Stators bzw. der Aufnahmetasche technisch einfach zu fixieren.

Gemäß einem ersten Aspekt der Erfindung wird eine elektrische Maschine umfassend einen Rotor und einen Stator vorgeschlagen, wobei der Rotor und/oder der Stator mindestens eine Aufnahmetasche zum Aufnehmen eines Permanentmagneten umfasst, dadurch gekennzeichnet, dass der Permanentmagnet mittels einer zweiteiligen Magnetfixierungsvorrichtung in der Aufnahmetasche befestigt ist, wobei das Magnetfixierungsvorrichtung - ein senkrecht zur Axialrichtung des Rotors und/oder Stators im Wesentlichen flexibel ausgebildetes Klemmelement und - ein senkrecht zur Axialrichtung des Rotors und/oder Stators im Wesentlichen starres Fixierungselement umfasst, wobei das Fixierungselement derart in dem Klemmelement angeordnet ist, dass das Fixierungselement das Klemmelement senkrecht zur Axialrichtung des Rotors und/oder Stators auseinanderdrückt zur reibschlüssigen Fixierung des Permanentmagneten in der Aufnahmetasche.

Ein Vorteil hiervon ist, dass kein thermischer Prozess bzw. keine Erhitzung und Abkühlung des Stators und/oder Rotors in der Regel notwendig ist. Dies spart üblicherweise Zeit und Energie. Darüber hinaus ist die Fixierung des Permanentmagneten in der Regel technisch einfach durchführbar und wieder lösbar. Hierdurch wird ein Austauschen des Permanentmagneten üblicherweise technisch vereinfacht. Zudem kann unabhängig von der axialen Länge des Rotors bzw. Stators bzw. der Aufnahmetasche der Permanentmagnet in der Aufnahmetasche in der Regel technisch einfach sicher fixiert werden.

Gemäß einem zweiten Aspekt der Erfindung wird ein Verfahren zum Befestigen eines Permanentmagneten in einer Aufnahmetasche eines Rotors oder Stators einer elektrischen Maschine vorgeschlagen, wobei das Verfahren folgende Schritte umfasst: Bereitstellen des Rotors oder Stators; Anordnen des Permanentmagneten in der Aufnahmetasche des Rotors oder Stators; Einführen eines Klemmelements in die Aufnahmetasche, wobei das Klemmelement senkrecht zur Axialrichtung des Rotors und/oder Stators im Wesentlichen flexibel ausgebildet ist; und Einführen eines senkrecht zur Axialrichtung des Rotors und/oder Stators im Wesentlichen starren Fixierungselements in das Klemmelement zum Auseinanderdrücken des Klemmelements in der Richtung senkrecht zur Axialrichtung des Rotors und/oder Stators zur reibschlüssigen Fixierung des Permanentmagneten in der Aufnahmetasche.

Ein Vorteil hiervon ist, dass das Fixieren des Permanentmagnets in der Aufnahmetasche im Allgemeinen ohne einen thermischen Prozess, d.h. ohne Erhitzen und Abkühlen des Rotors und/oder Stators, durchgeführt werden kann. Ein weiterer Vorteil ist, dass das Verfahren schnell und technisch einfach durchgeführt werden kann. Zudem ist die Fixierung des Permanentmagneten in der Regel technisch einfach wieder lösbar. Hierdurch wird ein Austauschen des Permanentmagneten üblicherweise technisch vereinfacht. Darüber hinaus kann unabhängig von der axialen Länge des Rotors bzw. Stators bzw. der Aufnahmetasche der Permanentmagnet in der Aufnahmetasche in der Regel technisch einfach sicher fixiert werden.

Ideen zu Ausführungsformen der vorliegenden Erfindung können unter anderem als auf den nachfolgend beschriebenen Gedanken und Erkenntnissen beruhend angesehen werden.

Gemäß einer Ausführungsform ist in axialer Richtung des Rotors und/oder Stators zwischen dem Klemmelement und dem Permanentmagneten ein höherer Reibungswiderstand als zwischen dem Klemmelement und dem Fixierungselement vorhanden. Hierdurch wird das Einbringen des Fixierungselements in das Klemmelement in der Regel technisch vereinfacht. Dadurch kann dies bei der Herstellung der elektrischen Maschine im Allgemeinen schnell durchgeführt. Gleichzeitig wird in der Regel eine besonders sichere Fixierung des Permanentmagneten in der Aufnahmetasche erreicht. Zwischen Klemmelement und Fixierungselement treten üblicherweise keine Kräfte in die axiale Richtung/Axialrichtung des Rotors/Stators auf, während in der Regel auf den Permanentmagneten Kräfte in die axiale Richtung des Rotors/Stators wirken.

Gemäß einer Ausführungsform weist das Klemmelement einen im Wesentlichen in axialer Richtung des Rotors oder Stators verlaufenden Hohlraum zum Aufnehmen des Fixierungselements auf, wobei ein Innendurchmesser des Hohlraums in der Richtung senkrecht zur Axialrichtung des Rotors und/oder Stators vor einem Auseinanderdrücken des Klemmelements durch das Fixierungselement kleiner oder größer ist als ein Außendurchmesser des Fixierungselements in der Richtung senkrecht zur Axialrichtung des Rotors und/oder Stators. Hierdurch wird das Einbringen des Klemmelements in die Aufnahmetasche in der Regel technisch vereinfacht.

Gemäß einer Ausführungsform weist das Klemmelement einen im Wesentlichen kreiszylinderförmigen Hohlraum auf, in dem das Fixierungselement angeordnet ist, wobei das Fixierungselement eine massive oder hohle kreiszylinderförmige Form aufweist. Ein Vorteil hiervon ist, dass die auf den Permanentmagneten ausgeübte Kraft durch die Magnetfixierungsvorrichtung im Wesentlichen gleichmäßig über die gesamte axiale Länge der Aufnahmetasche bzw. des Rotors/Stators ist. Hierdurch ist der Permanentmagnet in der Regel besonders sicher in der Aufnahmetasche fixiert. Darüber hinaus wird die Gefahr einer mechanischen Beschädigung des Permanentmagneten durch die Magnetfixierungsvorrichtung in der Regel vermindert.

Gemäß einer Ausführungsform besteht das Klemmelement und/oder Fixierungselement aus einem nicht-magnetischen Material. Ein Vorteil hiervon ist, dass die elektromagnetischen Eigenschaften, insbesondere die Leistung bzw. der magnetische Fluss, der elektrischen Maschine in der Regel durch die Magnetfixierungsvorrichtung bzw. das Klemmelement und/oder das Fixierungselement im Wesentlichen nicht verändert werden. Somit muss üblicherweise bei der Konstruktion der elektrischen Maschine hinsichtlich der elektromagnetischen Eigenschaften auf die Magnetfixierungsvorrichtung bzw. das Klemmelement und/oder das Fixierungselement keine besondere Rücksicht genommen werden.

Gemäß einer Ausführungsform ist das Klemmelement ein Schraubdübel und das Fixierungselement ist eine Schraube. Ein Vorteil hiervon ist, dass das Klemmelement üblicherweise besonders stark bzw. weit auseinandergedrückt werden kann. Zudem ist das Fixierungselement in der Regel besonders sicher in dem Klemmelement befestigt. Darüber hinaus können im Allgemeinen übliche kostengünstige Schraubdübel verwendet werden. Dies senkt in der Regel die Kosten.

Gemäß einer Ausführungsform erstreckt sich das Klemmelement über eine im Wesentlichen gesamte Länge des Permanentmagneten in axialer Richtung des Rotors oder Stators. Hierdurch wird in der Regel sichergestellt, dass der Permanentmagnet besonders sicher und über die gesamte Länge des Permanentmagneten gleichmäßig mit Kräften beaufschlagt wird. Hierdurch wird der Permanentmagnet in der Regel besonders schonend in der Aufnahmetasche befestigt bzw. fixiert. Dies erhöht üblicherweise die Lebensdauer der elektrischen Maschine.

Gemäß einer Ausführungsform des Verfahrens ist das Klemmelement ein Schraubdübel und das Fixierungselement ist eine Schraube. Ein Vorteil hiervon ist, dass das Klemmelement üblicherweise besonders stark bzw. weit auseinandergedrückt werden kann. Zudem wird das Fixierungselement in der Regel besonders sicher in dem Klemmelement befestigt. Darüber hinaus können im Allgemeinen übliche kostengünstige Schraubdübel verwendet werden. Dies senkt in der Regel die Kosten.

Gemäß einer Ausführungsform entspricht die Form des Klemmelements vor dem Einführen des Fixierungselements im Wesentlichen einer Form eines in axialer Richtung des Rotors oder Stators verlaufenden Freiraums zwischen dem Permanentmagneten und einer Innenoberfläche der Aufnahmetasche. Ein Vorteil hiervon ist, dass das Klemmelement in der Regel technisch besonders einfach in den Freiraum eingeführt werden kann. Zudem stützt sich das Klemmelement üblicherweise großflächig an der Innenoberfläche der Aufnahmetasche ab. Hierdurch werden in der Regel die auftretenden Kräfte besonders gleichmäßig verteilt.

Es wird darauf hingewiesen, dass einige der möglichen Merkmale und Vorteile der Erfindung hierin mit Bezug auf unterschiedliche Ausführungsformen der elektrischen Maschine bzw. des Verfahrens zum Befestigen eines Permanentmagneten in einer Aufnahmetasche eines Rotors oder Stators einer elektrischen Maschine beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Fig. 1 zeigt: eine perspektivische Ansicht auf einen Teil eines Rotors einer erfindungsgemäßen Ausführungsform der elektrischen Maschine vor dem Einbringen eines Fixierungselements in eine erste Ausführungsform eines Klemmelements;
- Fig. 2 zeigt: eine perspektivische Ansicht auf den in Fig. 1 gezeigten Teil des Rotors nach dem Einbringen des Fixierungselements in das Klemmelement;
- Fig. 3 zeigt: eine perspektivische Ansicht des Klemmelements aus Fig. 1 vor dem Einbringen des Fixierungselements in das Klemmelement;
- Fig. 4 zeigt: eine Querschnittsansicht des Klemmelements aus Fig. 1 vor dem Einbringen des Fixierungselements in das Klemmelement;
- Fig. 5 zeigt: eine perspektivische Ansicht des Klemmelements aus Fig. 3 während des Einbringens des Fixierungselements in das Klemmelement;
- Fig. 6 zeigt: eine Querschnittsansicht des Klemmelements aus Fig. 3 während des Einbringens des Fixierungselements in das Klemmelement;
- Fig. 7 zeigt: eine perspektivische Ansicht des Klemmelements aus Fig. 3 nach dem Einbringen des Fixierungselements in das Klemmelement;
- Fig. 8 zeigt: eine Querschnittsansicht des Klemmelements aus Fig. 3 nach dem Einbringen des Fixierungselements in das Klemmelement;
- Fig. 9 zeigt: eine perspektivische Ansicht einer zweiten Ausführungsform des Klemmelements;
- Fig. 10 zeigt: eine Querschnittsansicht des Klemmelements aus Fig. 9;
- Fig. 11 zeigt: eine perspektivische Ansicht einer dritten Ausführungsform des Klemmelements; und
- Fig. 12 zeigt: eine Querschnittsansicht des Klemmelements aus Fig. 11.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

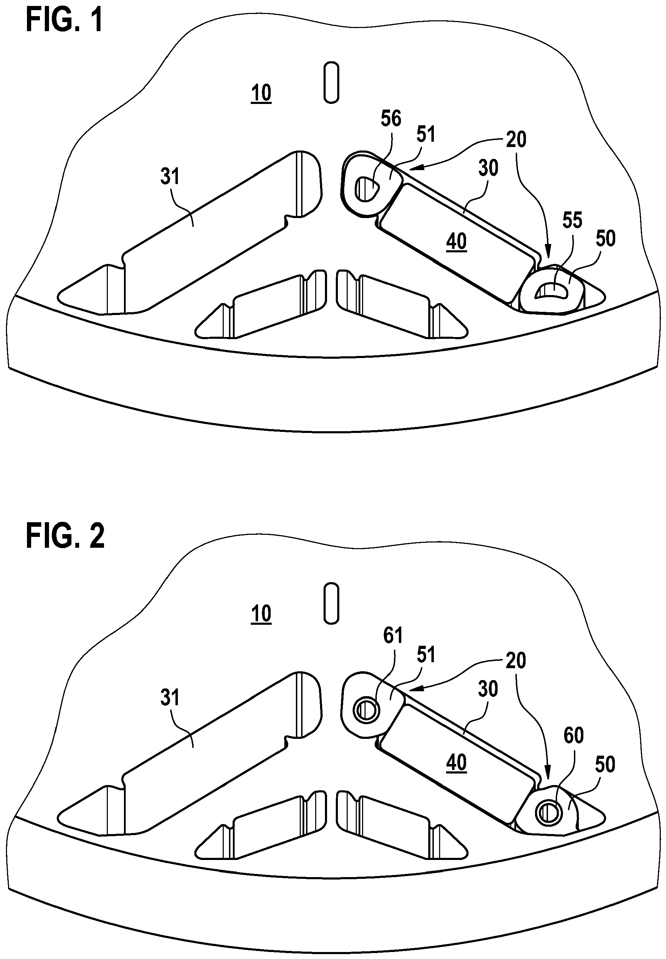

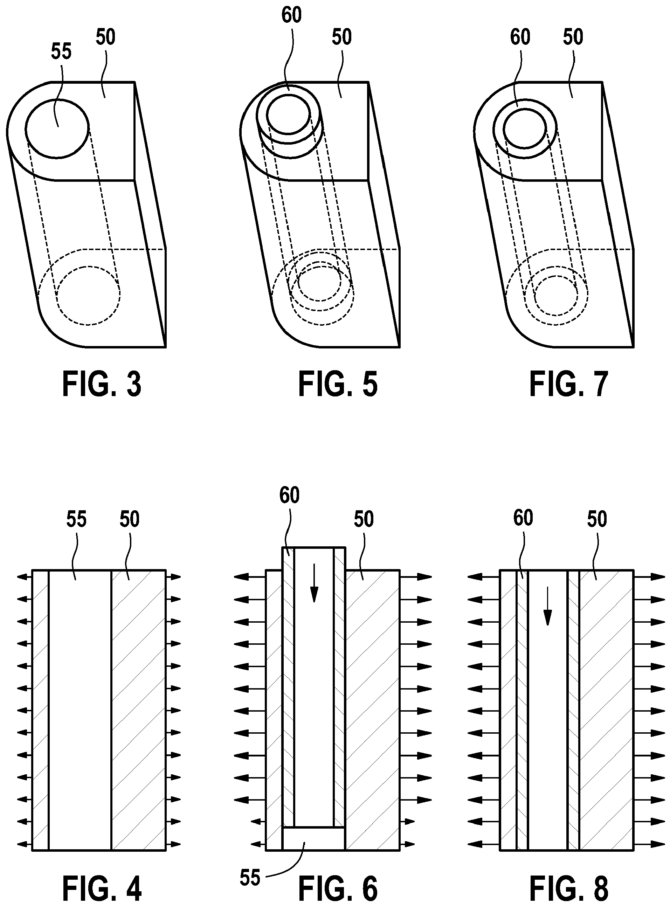

Fig. 1 zeigt eine perspektivische Ansicht auf einen Teil eines Rotors 10 einer erfindungsgemäßen Ausführungsform der elektrischen Maschine vor dem Einbringen eines Fixierungselements 60, 61 in eine erste Ausführungsform eines Klemmelements 50, 51. Fig. 2 zeigt eine perspektivische Ansicht auf den in Fig. 1 gezeigten Teil des Rotors 10 nach dem Einbringen des Fixierungselements 60, 61 in das Klemmelement 50, 51. Fig. 3 zeigt eine perspektivische Ansicht des Klemmelements 50, 51 aus Fig. 1 vor dem Einbringen des Fixierungselements 60, 61 in das Klemmelement 50, 51. Fig. 4 zeigt eine Querschnittsansicht des Klemmelements 50, 51 aus Fig. 1 vor dem Einbringen des Fixierungselements 60, 61 in das Klemmelement 50, 51. Fig. 5 zeigt eine perspektivische Ansicht des Klemmelements 50, 51 aus Fig. 3 während des Einbringens des Fixierungselements 60, 61. Fig. 6 zeigt eine Querschnittsansicht des Klemmelements 50, 51 aus Fig. 3 während des Einbringens des Fixierungselements 60, 61. Fig. 7 zeigt eine perspektivische Ansicht des Klemmelements 50, 51 aus Fig. 3 nach dem Einbringen des Fixierungselements 60, 61 in das Klemmelement 50, 51. Fig. 8 zeigt eine Querschnittsansicht des Klemmelements 50, 51 aus Fig. 3 nach dem Einbringen des Fixierungselements 60, 61 in das Klemmelement 50, 51.

Die elektrische Maschine umfasst einen Rotor 10 und einen Stator. In dem Rotor 10 und/oder Stator sind Aufnahmetaschen 30, 31 vorgesehen, in die Permanentmagnete 40 eingebracht werden. Die Permanentmagnete 40 weisen eine im Querschnitt zu der Axialrichtung des Rotors 10 bzw. Stators rechteckige Form auf. Entlang der Axialrichtung weisen die Permanentmagnete 40 eine geradlinige Form. Die Aufnahmetaschen 30, 31 weisen üblicherweise eine unregelmäßige Form auf, so dass zwischen Permanentmagnet 40 und der Innenoberfläche der Aufnahmetasche 30, 31 ein Zwischenraum bzw. Freiraum entsteht, der mit seiner größten Ausdehnung in die axiale Richtung bzw. Axialrichtung des Rotors 10 bzw. Stators verläuft.

Die Permanentmagnete 40 werden mittels einer zweiteiligen Magnetfixierungsvorrichtung 20 in der Aufnahmetasche 30, 31 befestigt. Die Aufnahmetaschen 30, 31 weisen ihre größte Ausdehnung in die Axialrichtung des Rotors 10 bzw. Stators auf. Die Axialrichtung verläuft in Fig. 4 bzw. Fig. 6 bzw. Fig. 8 von oben nach unten.

Die Magnetfixierungsvorrichtung 20 umfasst ein Klemmelement 50, 51 und ein Fixierungselement 60, 61. Insbesondere besteht die Magnetfixierungsvorrichtung 20 aus einem Klemmelement 50, 51 und einem Fixierungselement 60, 61. Das Klemmelement 50, 51 wird in den Zwischenraum bzw. Freiraum zwischen Permanentmagnet 40 und Innenoberfläche der Aufnahmetasche 30, 31 eingebracht bzw. in Axialrichtung des Rotors 10 bzw. Stators eingeschoben. Das Klemmelement 50, 51 ist in der Richtung bzw. den Richtungen senkrecht zur Axialrichtung des Rotors 10 bzw. Stators flexibel/leicht zusammendrückbar ausgebildet. In die Axialrichtung kann das Klemmelement 50, 51 starr oder ebenfalls flexibel ausgebildet sein. Das Klemmelement 50, 51 weist im Wesentlichen die Form des Freiraums zwischen dem Permanentmagneten 40 und der Innenoberfläche der Aufnahmetasche 30, 31 auf. Das Klemmelement 50, 51 kann sich durch seine Flexibilität bzw. Biegsamkeit senkrecht zur Axialrichtung der Form des Freiraums zwischen Permanentmagnet 40 und Innenoberfläche der Aufnahmetasche 30, 31 anpassen.

Das Klemmelement 50, 51 kann senkrecht zur Axialrichtung des Rotors 10/Stators etwas größer als der Freiraum sein. Vor bzw. während des Einbringens wird das Klemmelement 50, 51 in die Richtung senkrecht zur Axialrichtung des Rotors 10/Stators zusammengedrückt. Vorstellbar ist jedoch auch, dass das Klemmelement 50, 51 genau die Form und Größe des Freiraums aufweist. Auch vorstellbar ist, dass das Klemmelement 50, 51 in Axialrichtung (etwas) kleiner als der Freiraum ist. In Fig. 1 sind zwei Klemmelemente 50, 51 auf gegenüberliegenden Seiten des Permanentmagnets 40 eingebracht.

Das Klemmelement 50, 51 kann eine Höhe bzw. Größe in axialer Richtung aufweisen, die der Höhe bzw. Größe des Permanentmagneten 40 entspricht. Vorstellbar ist jedoch auch, dass das Klemmelement 50, 51 in axialer Richtung eine kleinere Größe aufweist als der Permanentmagnet 40.

Das Klemmelement 50, 51 weist einen Hohlraum 55, 56 auf. Der Hohlraum 55, 56 ist eine Aussparung in dem Klemmelement 50, 51. In dem Hohlraum 55, 56 wird ein Fixierungselement 60, 61 eingebracht. Das Fixierungselement 60, 61 drückt das Klemmelement 50, 51 senkrecht zur Axialrichtung auseinander. Dies bedeutet, dass der Durchmesser des Klemmelements 50, 51 senkrecht zur Axialrichtung größer wird. Das Fixierungselement 60, 61 drückt das Klemmelement 50, 51 gegen die Innenoberfläche der Aufnahmetasche 30, 31 und gegen den Permanentmagneten 40 und fixiert bzw. befestigt auf diese Weise den Permanentmagneten 40 in der Aufnahmetasche 30, 31. Insbesondere kann der fixierte Permanentmagnet 40 sich nicht in Axialrichtung bewegen. Ein reiner Reibschluss zwischen Klemmelement 50, 51 und Fixierungselement 60, 61 wird hierdurch hergestellt. Zwischen dem Klemmelement 50, 51 und dem Permanentmagnet 40 bzw. der Aufnahmetasche 30, 31 kann ebenfalls ein reiner Reibschluss hierdurch hergestellt werden.

Das Fixierungselement 60, 61 ist senkrecht zur Axialrichtung im Wesentlichen starr/steif ausgebildet. In Axialrichtung kann das Fixierungselement 60, 61 starr/steif oder flexibel/biegsam/zusammendrückbar ausgebildet sein. Durch Entfernen des Fixierungselements 60, 61 aus dem Klemmelement 50, 51 kann das Klemmelement 50, 51 wieder einfach aus der Aufnahmetasche 30, 31 entfernt werden. Nun kann der Permanentmagnet 40 einfach aus der Aufnahmetasche 30, 31 entfernt oder ausgetauscht werden.

Das Fixierungselement 60, 61 kann ein massiver oder hohler Kreiszylinder sein. Alternativ ist vorstellbar, dass das Fixierungselement 60, 61 ein (kreis-)zylindrischer Bolzen mit Einführschräge ist oder ein konischer Bolzen ist. Auch denkbar ist, dass das Klemmelement 50, 51 ein Schraubdübel ist, der von dem Fixierungselement 60, 61 in Form einer Schraube während des Einführens des Fixierungselements 60, 61 in das Klemmelement 50, 51 senkrecht zur Axialrichtung auseinandergedrückt wird.

Die Form des Hohlraums 55, 56 kann der Form des Kreiszylinders entsprechen. Das Fixierungselement 60, 61 kann z.B. aus Kunststoff bestehen. Das Klemmelement 50, 51 kann z.B. aus Schaumstoff bestehen.

In den Fig. 3-8 ist das Einführen des Fixierungselements 60, 61 in das Klemmelement 50, 51 gezeigt. Die horizontalen Pfeile zeigen den Druck bzw. die Kraft, die das Klemmelement 50, 51 auf die Innenoberflächen der Aufnahmetaschen 30, 31 bzw. den Permanentmagneten 40 bewirkt. Vor dem Einführen des Fixierungselements 60, 61 drückt das Klemmelement 50, 51 bereits etwas gegen die Innenoberfläche der Aufnahmetasche 30, 31 und gegen den Permanentmagneten 40. Nach dem Einführen des Fixierungselements 60, 61 in den Hohlraum 55, 56 des Klemmelements 50, 51 (und dem Auseinanderdrücken des Klemmelements 50, 51) drückt das Klemmelement 50, 51 stärker gegen den Permanentmagneten 40 und die Innenoberfläche der Aufnahmetasche 30, 31.

Das Fixierungselement 60, 61 wird soweit in das Klemmelement 50, 51 eingeführt, dass das Fixierungselement 60, 61 nicht über die Höhe des Rotors 10 bzw. Stators hinaussteht, so dass das Fixierungselement 60, 61 beim Bewegen des Rotors 10 bzw. Stators nicht stört. Das Fixierungselement 60, 61 kann eine sogenannte Madenschraube bzw. ein Gewindestift bzw. Stift sein, so dass das Fixierungselement 60, 61 vollständig in Axialrichtung in die Aufnahmetasche 30, 31 bzw. das Klemmelement 50, 51 eingeführt werden kann.

Das Fixierungselement 60, 61 und/oder das Klemmelement 50, 51 können sich über die gesamte Höhe des Lamellenpakets des Rotors 10/Stators in axialer Richtung erstrecken. Bei einem geschrägten Rotors 10 bzw. Stator, bei dem mehrere in axialer Richtung übereinander angeordnete Lamellenpakete zueinander um einen Winkelbetrag in Umfangsrichtung versetzt sind, können sich das Fixierungselement 60, 61 und/oder das Klemmelement 50, 51 über die Höhe des jeweiligen Lamellenpakets erstrecken.

Der Reibungswiderstand zwischen Klemmelement 50, 51 und Permanentmagnet 40 bzw. der Innenoberfläche der Aufnahmetasche 30, 31 in Axialrichtung kann höher sein als der Reibungswiderstand zwischen Klemmelement 50, 51 und Fixierungselement 60, 61 in Axialrichtung. Hierdurch kann das Fixierungselement 60, 61 einfach in das Klemmelement 50, 51 eingeführt werden. Dies kann z.B. durch unterschiedliche Materialien und/oder durch eine oder mehrere Beschichtungen und/oder Oberflächenbeschaffenheiten der jeweiligen in Kontakt miteinander kommenden/befindlichen Oberflächen geschehen.

Das Fixierungselement 60, 61 und/oder das Klemmelement 50, 51 bestehen aus einem nicht-magnetischen Material, z.B. Kunststoff. Das Fixierungselement 60, 61 und/oder das Klemmelement 50, 51 sind insbesondere aus einem Material, das den Magnetfluss nicht beeinträchtigt.

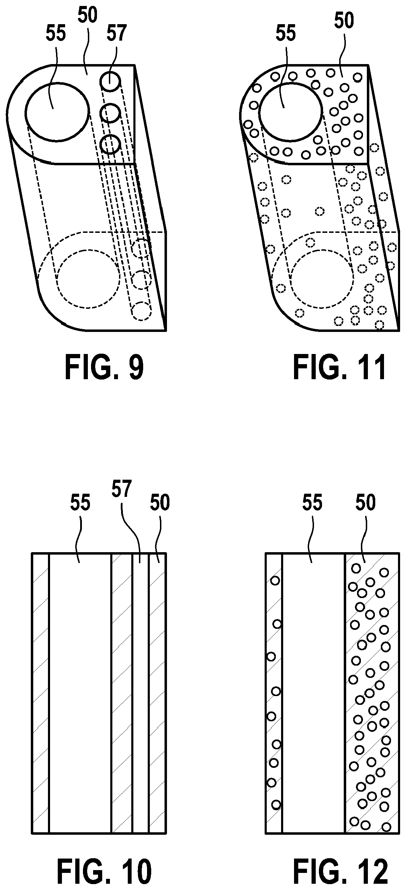

Fig. 9 zeigt eine perspektivische Ansicht einer zweiten Ausführungsform des Klemmelements 50, 51. Fig. 10 zeigt eine Querschnittsansicht des Klemmelements 50, 51 aus Fig. 9. Fig. 11 zeigt eine perspektivische Ansicht einer dritten Ausführungsform des Klemmelements 50, 51. Fig. 12 zeigt eine Querschnittsansicht des Klemmelements 50, 51 aus Fig. 11.

Das Klemmelement 50, 51 kann zur Veränderung bzw. zur Einstellung der Steifigkeit bzw. Starrheit mit einer oder mehreren Aussparungen 57 versehen werden bzw. versehen sein. Die Aussparungen 57 können parallel oder schräg zu dem Hohlraum 55, 56 verlaufen. Vorstellbar ist auch, dass das Klemmelement 50, 51 aus einem porösen Material besteht, wie dies in Fig. 11 bzw. Fig. 12 gezeigt ist.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Elektrische Maschine umfassend einen Rotor (10) und einen Stator,
wobei der Rotor (10) und/oder der Stator mindestens eine Aufnahmetasche (30, 31) zum Aufnehmen eines Permanentmagneten (40) umfasst, **dadurch gekennzeichnet, dass**
der Permanentmagnet (40) mittels einer zweiteiligen Magnetfixierungsvorrichtung (20) in der Aufnahmetasche (30, 31) befestigt ist,
wobei die Magnetfixierungsvorrichtung (20)
- ein senkrecht zur Axialrichtung des Rotors (10) und/oder Stators im Wesentlichen flexibel ausgebildetes Klemmelement (50, 51)
und
- ein senkrecht zur Axialrichtung des Rotors (10) und/oder Stators im Wesentlichen starres Fixierungselement (60, 61)
umfasst,
wobei das Fixierungselement (60, 61) derart in dem Klemmelement (50, 51) angeordnet ist, dass das Fixierungselement (60, 61) das Klemmelement (50, 51) senkrecht zur Axialrichtung des Rotors (10) und/oder Stators auseinanderdrückt zur reibschlüssigen Fixierung des Permanentmagneten (40) in der Aufnahmetasche (30, 31).

2. Elektrische Maschine nach Anspruch 1, wobei
in axialer Richtung des Rotors (10) und/oder Stators zwischen dem Klemmelement (50, 51) und dem Permanentmagneten (40) ein höherer Reibungswiderstand als zwischen dem Klemmelement (50, 51) und dem Fixierungselement (60, 61) vorhanden ist.

3. Elektrische Maschine nach Anspruch 1 oder 2, wobei
das Klemmelement (50, 51) einen im Wesentlichen in axialer Richtung des Rotors (10) oder Stators verlaufenden Hohlraum (55, 56) zum Aufnehmen des Fixierungselements (60, 61) aufweist, wobei ein Innendurchmesser des Hohlraums (55, 56) in der Richtung senkrecht zur Axialrichtung des Rotors (10) und/oder Stators vor einem Auseinanderdrücken des Klemmelements (50, 51) durch das Fixierungselement (60, 61) kleiner oder größer ist als ein Außendurchmesser des Fixierungselements (60, 61) in der Richtung senkrecht zur Axialrichtung des Rotors (10) und/oder Stators.

4. Elektrische Maschine nach einem der vorhergehenden Ansprüche, wobei das Klemmelement (50, 51) einen im Wesentlichen kreiszylinderförmigen Hohlraum (55, 56) aufweist, in dem das Fixierungselement (60, 61) angeordnet ist, wobei das Fixierungselement (60, 61) eine massive oder hohle kreiszylinderförmige Form aufweist.

5. Elektrische Maschine nach einem der vorhergehenden Ansprüche, wobei das Klemmelement (50, 51) und/oder Fixierungselement (60, 61) aus einem nicht-magnetischen Material besteht.

6. Elektrische Maschine nach einem der vorhergehenden Ansprüche, wobei das Klemmelement (50, 51) ein Schraubdübel ist und das Fixierungselement (60, 61) eine Schraube ist.

7. Elektrische Maschine nach einem der vorhergehenden Ansprüche, wobei sich das Klemmelement (50, 51) über eine im Wesentlichen gesamte Länge des Permanentmagneten (40) in axialer Richtung des Rotors (10) oder Stators erstreckt.

8. Verfahren zum Befestigen eines Permanentmagneten (40) in einer Aufnahmetasche (30, 31) eines Rotors (10) oder Stators einer elektrischen Maschine, wobei das Verfahren folgende Schritte umfasst:
Bereitstellen des Rotors (10) oder Stators;
Anordnen des Permanentmagneten (40) in der Aufnahmetasche (30, 31) des Rotors (10) oder Stators;
Einführen eines Klemmelements (50, 51) in die Aufnahmetasche (30, 31), wobei das Klemmelement (50, 51) senkrecht zur Axialrichtung des Rotors (10) und/oder Stators im Wesentlichen flexibel ausgebildet ist; und Einführen eines senkrecht zur Axialrichtung des Rotors (10) und/oder Stators im Wesentlichen starren Fixierungselements (60, 61) in das Klemmelement (50, 51) zum Auseinanderdrücken des Klemmelements (50, 51) in der Richtung senkrecht zur Axialrichtung des Rotors (10) und/oder Stators zur reibschlüssigen Fixierung des Permanentmagneten (40) in der Aufnahmetasche (30, 31).

9. Verfahren nach Anspruch 8, wobei
das Klemmelement (50, 51) ein Schraubdübel ist und das Fixierungselement (60, 61) eine Schraube ist.

10. Verfahren nach Anspruch 8 oder 9, wobei
die Form des Klemmelements (50, 51) vor dem Einführen des Fixierungselements (60, 61) im Wesentlichen einer Form eines in axialer Richtung des Rotors (10) oder Stators verlaufenden Freiraums zwischen dem Permanentmagneten (40) und einer Innenoberfläche der Aufnahmetasche (30, 31) entspricht.
